**Europäisches Patentamt**

**European Patent Office**

**Office européen des brevets**

(11) Veröffentlichungsnummer: **0 195 185**
**A2**

(12) **EUROPÄISCHE PATENTANMELDUNG**

(21) Anmeldenummer: **86100653.4**

(22) Anmeldetag: **20.01.86**

(51) Int. Cl.⁴: **G 05 D 16/20**
**G 01 L 9/00**

(30) Priorität: **09.03.85 DE 3508481**

(43) Veröffentlichungstag der Anmeldung:
**24.09.86 Patentblatt 86/39**

(84) Benannte Vertragsstaaten:
**DE FR GB IT SE**

(71) Anmelder: **VDO Adolf Schindling AG**
**Gräfstrasse 103**
**D-6000 Frankfurt/Main(DE)**

(72) Erfinder: **Wietschorke-Muhsold, Stephan**
**Egerländer Strasse 6**
**D-6390 Usingen(DE)**

(72) Erfinder: **Göcking, Wolfgang**
**Ad.-Reichweinstrasse 105**
**D-6392 Neu Ansbach(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Strom-Druckwandler insbesondere für eine Unterdruckregelung in Kraftfahrzeugen.**

(57) Ein Strom-Druckwandler insbesondere für eine Unterdruckregelung in Kraftfahrzeugen ist mit einer Kammer (11) ausgebildet, die mit einem Anschluß (18) für Versorgungsunterdruck, mit einem Anschluß (19) für eine Steuerdruckabnahme, mit einem Lufteinlaß für Außendruck und mit einer Membran (12) als Kammerwand versehen ist. Die Membran kann durch einen Tauchanker (5) eines Tauchanker-Elektromagneten (1-7) verschoben werden. Dabei wird mit der Membran ein Doppelventil (13-17) gesteuert, welches je nach der Stellung der Membran (12) eine Fluid-leitende Verbindung zu dem Versorgungsunterdruck oder dem Außendruck herstellen kann, bis der Steuerdruck in der Kammer (11) der von dem Tauchanker (5) auf die Membran ausgeübten Kraft entspricht, insbesondere dieser proportional ist. Zur Endstellung der Steigung der Druck-Stromkennlinie ist ein annähernd ringförmiger Luftspalt (6) zwischen dem Tauchanker (5) und einem Kern (3) des Elektromagneten zu dessen Längsachse exzentrisch gestaltet und um die Längsachse drehbar einstellbar. Der Tauchanker (5) ist dazu um einen Schwenkpunkt außerhalb der Mittelachse schwenkbar gelagert.

FIG. 1

VDO Adolf Schindling AG      - 1 -      6000 Frankfurt/Main
                                        Gräfstraße 103
                                        G-R Kl-kmo  / 1820
                                        7. März 1985

**Strom-Druckwandler insbesondere für eine Unterdruckregelung in Kraftfahrzeugen**

Die Erfindung betrifft einen Strom-Druckwandler insbesondere
für eine Unterdruckregelung in Kraftfahrzeugen nach dem
Oberbegriff des Anspruchs 1.

Derartige Stromdruckwandler können zum Einsatz in Abgasrückführanlagen und bei einer Turboladersteuerung zur Ansteuerung der Bypass-Ventile vorgesehen werden.

Merkmale des gattungsgemäßen Strom-Druckwandlers sind bei
einem Unterdruckregler für Vakuumanlagen insbesondere für
die Prüfung von Zündverteilern mit doppelter Unterdruckverstellung bekannt, wobei mit einer einzigen Vakuumpumpe
und zwei derartigen Unterdruckreglern gearbeitet wird (DE-OS
21 09 597). Eine Kammer dieses Unterdruckreglers ist mit
einem Anschluß für Versorgungsunterdruck sowie einem Anschluß
zur Abnahme eines einstellbaren geregelten Unterdrucks versehen. Die Kammer ist an einer Seite mit einer Membran abgeschlossen, die über eine Feder mit einer Gewindestange
verbunden ist, welche sich ihrerseits über eine Rändelmutter an einem Fortsatz der Kammer abstützt. Je nach der
Einstellung der Gewindestange wird auf die Membran eine
mehr oder weniger große Kraft ausgeübt. Die Stellung der Membran hängt von dieser Kraft sowie von dem in der Kammer herrschenden Unterdruck im Verhältnis zu dem Außendruck (Atmosphärendruck) ab. Die Membran beeinflußt über einen zweiarmigen Hebel einen als Kugel ausgebildeten ersten Ventilkörper, der sich innerhalb der Kammer gegen einen kegelförmigen Ventilsitz abstützt, sowie einen zweiten ebenfalls als Kugel geformten Ventilkörper, der außerhalb der Kammer angeordnet ist. Eine Druckfeder sucht den zweiten Ventilkörper stets gegen den zugehörigen Ventilkörper zu bewegen. Der erste Ventilkörper wird durch den Unterdruck in der Kammer gegen seinen Ventilsitz bewegt, soweit die Durchbiegung der Membran dies zuläßt. Der zweite Ventiklörper hebt dann von seinem Sitz ab und stellt eine Verbindung zwischen der Kammer und dem Außendruck (Atmosphäre) her, wenn die Rändelmutter im Sinne eines geringeren Unterdruckes in der Kammer verstellt wird. Der zweite Ventilkörper schließt dann wieder, wenn der Unterdruck in der Kammer den vorgegebenen Wert erreicht hat.

Es ist zwar denkbar, die Gewindestange, die Feder und die Rändelmutter des bekannten Druckreglers durch einen Tauchanker-Elektromagneten zu ersetzen, um den Unterdruck in der Kammer und damit den entnehmbaren Steuerdruck in Abhängigkeit von dem Strom zu steuern, mit dem der Tauchanker-Elektromagnet erregt wird. Damit ist aber noch keine Lehre dafür gegeben, wie eine Druck-Stromkennlinie eines derartigen Strom-Druckwandlers beeinflußt werden kann, damit diese Kennlinie mehr oder weniger steil verläuft. Es könnte höchstens daran gedacht werden, die Feder zwischen der Gewindestange und der Membran auszutauschen, damit ist aber nur eine stufenweise Einstellung der Kennlinie möglich.

Der vorliegenden Erfindung liegt daher die Aufgabe zugrunde, einen Strom-Druckwandler der eingangs genannten Gattung so auszuführen, daß mit ihm eine Druck-Stromkennlinie einstellbarer Steilheit realisiert werden kann. Die Linearität der Druck-Stromkennlinie soll damit möglichst wenig beeinflußt werden.

Diese Aufgabe wird durch den Aufbau des Strom-Druckwandlers mit den im kennzeichnenden Teil des Anspruchs 1 angegebenen Merkmalen gelöst.

Zu dem erfinderischen Prinzip gehört, daß die engste Stelle des radialen Luftspalts bezüglich des Schwenkpunkts des Tauchankers verschoben wird. Die engste Stelle des Luftspalts ist gleichbedeutend der Stelle, an der die größte Kraftwirkung zwischen dem Tauchanker und dem Kern des Tauchanker-Elektromagneten entsteht. Durch die Verschiebung der engsten Stelle des Luftspalts wird somit auch der Angriffspunkt der resultierenden Gesamtkraft verändert. Da der Schwenkpunkt unsymmetrisch zu der Mittelachse des Systems angeordnet ist, entsteht an dem Tauchanker ein mehr oder weniger großes Moment um die Schwenkachse, welches auf die Membran - vorzugsweise über den Ventilblock - einwirkt. Die exzentrische Gestaltung des Luftspalts zwischen dem Tauchanker und dem Kern des Elektromagneten setzt einen annähernd rotations-symmetrischen Aufbau des Tauchanker-Elektromagneten um die Längsachse voraus.

Somit kann durch die Dreheinstellung des exzentrischen Luftspalts die Steilheit der Druck-Stromkennlinie verändert werden, die von dem Faktor abhängt, mit dem ein den Tauchanker-Elektromagneten erregender Strom eine Vorspannung der Membran an der Kammer hervorruft.

Durch die Dreh-Einstellung des Luftspalts wird die Linearität der Kennlinie, d.h. die Abhängigkeit des resultierenden Steuerdrucks von dem erregenden Strom nicht beeinträchtigt.

Die Genauigkeit des Strom-Druckwandlers wird durch die Kennlinieneinstellung nicht herabgesetzt, da keine zusätzliche Reibungshysterese durch die Einstellmittel für den radialen exzentrischen Luftspalt erzeugt wird. Schließlich lassen sich die Mittel zur Einstellung des exzentrischen Luftspalts mit geringem Aufwand fertigen und montieren.

Im einzelnen ist nach Anspruch 2 zur schwenkbaren Lagerung des Tauchankers eine Biegefeder vorgesehen. Die Rückstellkraft einer solchen Biegefeder ist so unerheblich, daß dadurch die Druck-Stromkennlinie nicht verfälscht wird. Die Biegefeder stellt ein einfaches Mittel zur Realisierung der scharnierartigen Lagerung des Tauchankers dar.

Die exzentrische Gestaltung des annähernd ringförmigen Luftspalts erfolgt besonders wenig aufwendig nach Anspruch 3 durch eine entsprechende Gestaltung des im wesentlichen zylindrischen Spulenkerns des Tauchanker-Elektromagneten. Der Spulenkern ist drehbar einstellbar, d.h. der Spulenkern kann manuell zur Einstellung der Druck-Stromkennlinie gedreht werden, behält aber anschließend im Betrieb des Strom-Druckwandlers seine Drehlage bei.

Mit einer zusätzlichen Vorspannungsfeder nach Anspruch 4, die den Spulenkern des Tauchanker-Elektromagneten mit dem Tauchanker bzw. der Membran der Kammer verbindet, kann der Nullpunkt der Kennlinie vorgegeben werden (Offset).

Mit einer Stellschraube ist die Vorspannung der Vorspannnungs-feder bevorzugt kontinuierlich einstellbar, um den Nullpunkt der Druck-Stromkennlinie stetig verschieben zu können.

Das Doppelventil, das zu dem Strom-Druckwandler gehört, ist nach dem Oberbegriff des Anspruchs 6 mit einem im wesentlichen als Hohlzylinder geformten Ventilblock ausgebildet, der in die Membran eingelassen ist. Der Ventilblock bildet in Verbindung mit einem an einen Atmosphärenventilsitz angedrückten Ventilkörper ein Atmosphärenventil zwischen der Kammer und dem Außendruck. Außerdem bildet er zusammen mit einem Versorgungsventilsitz an dem Anschluß für Versorgungsunterdruck ein Vakuumventil. Der Ventilkörper, der mit diesem Ventilblock zusammenwirkt, kann generell scheibenförmig sein. In diesem Fall dient der mittlere Bereich der Scheibe zum Abschließen des Versorgungsventilsitzes, während der äußere Scheibenrand der vorzugsweisen kreisförmigen Scheibe mit dem schneidenförmigen Atmosphärenventilsitz in dem Ventilblock zusammenwirkt. Die einwandfreie Funktion, d.h. die Möglichkeit eines vollkommenen Schließens des Atmosphärenventilsitzes und des Versorgungsventilsitzes gleichzeitig setzt aber voraus, daß die beiden Ventilsitze in exakt parallelen Ebenen zueinander liegen. Dies erfordert einen entsprechenden Fertigungsaufwand, insbesondere Montageaufwand.

Durch die besondere Gestaltung des Ventilkörpers nach dem kennzeichnenden Teil des Anspruchs 6 können aber sowohl der Versorgungsventilsitz als auch der - einfach gestaltete - Atmosphärenventilsitz gleichzeitig mit demselben Ventilkörper dicht verschlossen werden, auch wenn die Ventilsitze nicht in exakt zueinander parallelen Ebenen liegen. Die Lage des Ventilkörpers wird durch den Versorgungsventilsitz bestimmt, der durch die eine der beiden Abflachungen des kugelkalottenförmigen Ventilkörpers dicht verschlossen wird. Wenn in dieser Situation durch den Ventilkörper auch der Atmosphärenventilsitz zu schließen ist, geschieht dies ohne weiteres vollständig infolge der Krümmung des mit diesem Ventilsitz zusammenarbeitenden kugelförmigen Teils des Ventilkörpers. Durch den sicheren Verschluß des Versorgungsventilsitzes kann der Luftverbrauch minimiert werden, d.h. eine Vakuumquelle wird im eingeregelten Zustand des Strom-Druckwandlers nur entsprechend der Steuerdruckentnahme belastet. Dadurch erschließen sich dem Strom-Druckwandler besondere Einsatzmöglichkeiten im Kraftfahrzeugwesen, insbesondere in Dieselfahrzeugen mit begrenzter Unterdruckpumpleistung. - Zu der sicheren Ausrichtung des Ventilkörpers an dem Versorgungsventilsitz bei Schwingungsbelastung des Strom-Druckwandlers, die beispielsweise durch Motorvibration hervorgerufen wird, trägt die zweite der beiden Abflachungen des Ventilkörpers wesentlich bei: Durch die zweite Abflachung wird der Ventilkörper symmetrisch zur Mittelebene, die parallel zu den beiden Abflachungen liegt, ausgebildet. Damit fallen der Massenschwerpunkt und das Momentenzentrum des Ventilkörpers praktisch zusammen, und der Ventilkörper, der sich auf einer Druckfeder abstützt, nimmt keine schwerpunktbedingte Vorzugslage ein.

Die Erfindung wird im folgenden anhand einer Zeichnung mit 4 Figuren erläutert. Es zeigen:

Fig. 1   einen Druck-Stromwandler im Längsschnitt,

Fig. 2   einen Querschnitt durch den Tauchanker-Elektromagneten im Bereich des annähernd ringförmigen exzentrischen Luftspalts,

Fig. 3   einstellbare Druck-Stromkennlinien und

Fig. 4   eine Einzelheit einer bevorzugten Variante eines
Doppelventils des Strom-Druckwandlers im Längsschnitt, insbesondere den Ventilkörper.

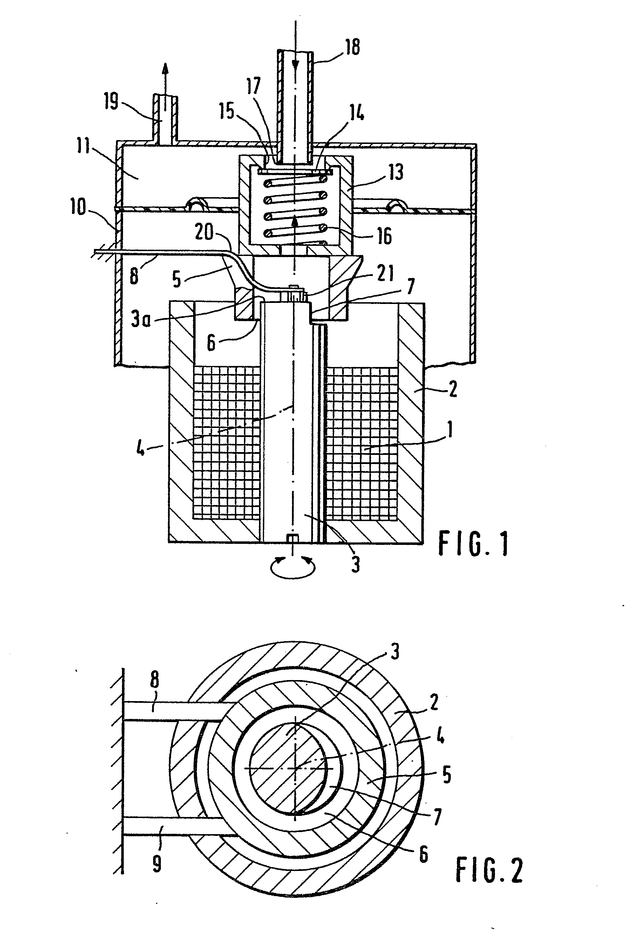

In Fig. 1 ist mit 1 ein Elektromagnet eines Tauchanker-
Elektromagneten bezeichnet, der in einem ferromagnetischen
Topf 2 um einen Spulenkern 3 angeordnet ist. Der Elektromagnet mit dem ferromagnetischen Topf und dem Spulenkern
ist im wesentlichen symmetrisch zu einer Längsachse 4.

An dem offenen Ende des Spulentopfes im Bereich einer Stirnseite 3a des Spulenkerns wird letztere teilweise von einem
Tauchanker 5, ebenfalls aus ferromagnetischem Material umgeben. Der Tauchanker ist ebenfalls rotationssymmetrisch zu
der Längsachse 4 ausgebildet, und zwar im wesentlichen
als Hohlzylinder, der sich aber an einem Teil seines Außenumfangs erweitert. Mit dieser Formgebung des Tauchankers soll eine
weitgehende Unabhängigkeit der von dem Elektromagneten auf
den Tauchanker ausgeübten Kraft von der Wegstellung des
Tauchankers erzielt werden, indem die Eigenschaften eines
normalen Flachankers und eines zylindrischen Tauchankers
kombiniert sind. - Die weiterhin erwünschte Strom/Kraft-
Linearität wird durch Erregung des Elektromagneten in einem
Magnetisierungsbereich erzielt, in welchem der durch den ferromagnetischen Topf, den Tauchanker und den Spulenkern gebildete
magnetische Kreis teilgesättigt ist.

Eine Besonderheit des Spulenkerns ist eine zu der Längsachse
4 exzentrische Abdrehung 7 im Bereich der Stirnseite 3a.
Weiterhin ist der Spulenkern in dem ferromagnetischen Topf
durch ein Werkzeug drehbar. Dadurch ist die Umfangslage
des Luftspalts 6, der infolge der exzentrischen Abdrehung 7
des Spulenkerns ebenfalls exzentrisch ist, einstellbar.

- 8 -

Damit sich diese Einstellbarkeit des Luftspalts auf das Verhalten des Tauchankers auswirkt, ist dieser mit Biegefedern 8 und 9 innen an einem Gehäuse 10 gelagert. Dabei liegt ein nicht dargestellter Schwenkpunkt der Biegefedern in der Nähe der Stelle, an der jeweils die Biegefeder in das Gehäuse eingelassen ist. Die Biegefedern wirken somit als Scharniere um die jeweiligen Schwenkpunkte.

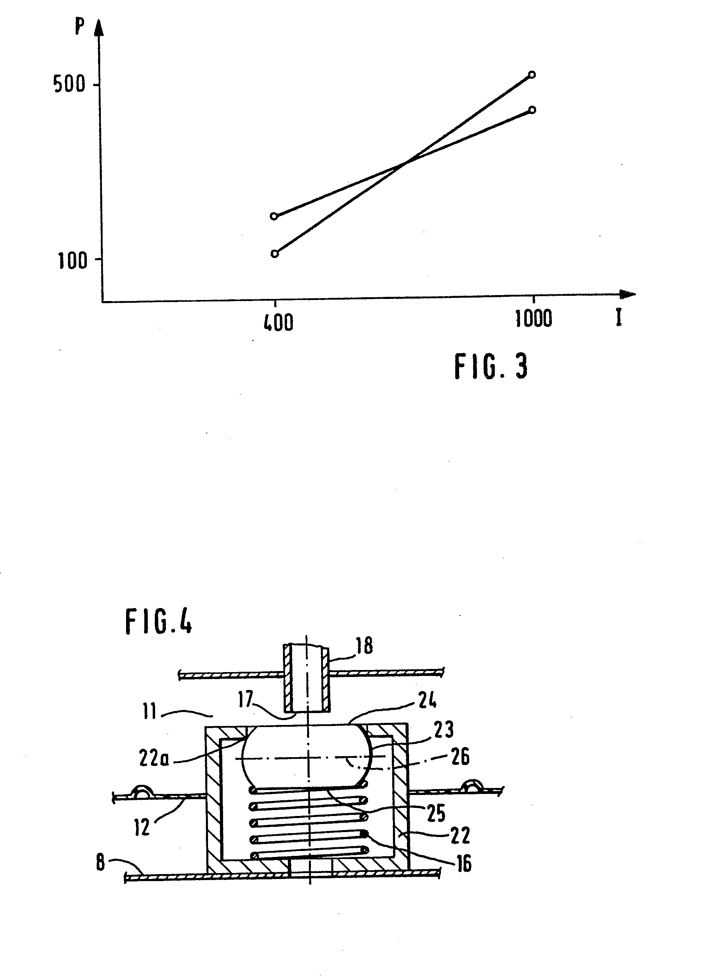

Da die engste Stelle des Luftspalts 6 für die Krafteinleitung auf den Tauchanker 5 bestimmend ist, kann durch Verdrehen des Spulenkerns mit der exzentrischen Abdrehung die Stelle der stärksten Krafteinleitung auf den Tauchanker bezüglich dem Schwenkpunkt vorgegeben werden. Wenn die Stelle der stärksten Krafteinleitung auf den Tauchanker nahe dem Schwenkpunkt ist, wird in dem Tauchanker ein kleines Schwenkmoment eingeleitet, im umgekehrten Fall, wenn die Stelle der stärksten Krafteinleitung am entferntesten von dem Schwenkpunkt ist, ein großes Schwenkmoment. Diese Einstellung der Lage der stärksten Krafteinleitung auf den Tauchanker bestimmt in noch weiter zu erläuternder Weise die Druck-Stromkennlinie in Fig. 3, d.h. die Steilheit dieser Kennlinie.

Zu dem Strom-Druckwandler gehört ein Ventilteil mit einem Doppelventil, welches in einer Kammer 11 angeordnet ist. Die Kammer wird auf einer Seite weitgehend durch eine Membran 12 abgeschlossen, in die ein Ventilblock 13 eingelassen ist. Der Ventilblock ist im wesentlichen als Hohlzylinder ausgebildet und durch einen plattenförmigen Ventilkörper 14 verschließbar, der durch eine Druckfeder 16 gegen einen ringschneidenförmigen Atmosphärenventilsitz 15 gedrückt wird. Der Atmosphärenventilsitz und der Ventilkörper bilden ein Atmosphärenventil. Andererseits ist der Ventilkörper zugleich

Bestandteil eines Vakuumventils, welches mit einem Versorgungsventilsitz 17 am Ende eines Anschlusses 18 für Versorgungsunterdruck gebildet wird. Der Ventilkörper kann zusammen mit dem Ventilblock 13 gegen den Versorgungsventilsitz gedrückt werden, wenn die Membran 12 entsprechend nachgibt.

Der Elektromagnet 1 wirkt mittels Magnetkraft auf den Tauchanker 5 und damit über den Ventilblock 13 auf die Membran 12 ein. Durch eine Vorspannfeder 20, die der Magnetkraft entgegenwirkt und die mittels einer Stellschraube 21 an dem Kern 3 der Spule angebracht ist, wird auf die Membran 12 eine Vorspannung übertragen, welche den Nullpunkt der Druck-Stromkennlinien in Fig. 3 (Offset) festlegt.

Je nach Erregung des Elektromagneten übt dieser über den Tauchanker 5 eine Kraft auf den Ventilblock 13 aus, welcher somit den Ventilkörper 14 von dem Versorgungsventilsitz 17 wegzieht. Das Atmosphärenventil ist dabei durch Andruck des Ventilkörpers an den Atmosphärenventilsitz geschlossen. In der Kammer 11 fällt somit der Steuerdruck ab, der von dem Anschluß 19 entnommen werden kann. Zugleich wird durch den geringeren Steuerdruck in der Kammer die Membran in entgegengesetzter Richtung zu der durch die Magnetkraft bewirkten Verstellung verformt, so daß sich der Ventilblock 13 zusammen mit dem Ventilkörper wieder auf den Versorgungsventilsitz 17 zubewegt, bis bei Kräftegleichgewicht an der Membran das Vakuumventil geschlossen ist. - Lässt bei geschlossenem Vakuumventil, d.h. an dem Versorgungsventilsitz anliegendem Ventilkörper, die Magnetkraft nach, so wird der Ventilblock 13 weiter hochgedrückt. Dabei wird der Ventilkörper von dem Atmosphärenventilsitz entgegen der Kraft der Druckfeder 16 durch den Versorgungsventilsitz

herabgedrückt. Das Atmosphärenventil öffnet also und der Steuerdruck in der Kammer steigt durch teilweisen Ausgleich mit
dem Außendruck wieder an. Dieser Ausgleich erfolgt so lange,
bis der Steuerdruck der Magnetkraft entspricht.

Somit stellt der Stromdruckwandler den Steuerdruck ein, der
dem den Elektromagneten erregenden Strom weitgehend proportional ist, der jedoch unabhängig ist von Schwankungen
des Versorgungsunterdrucks. Das Vakuumventil und das
Atmosphärenventil werden nur so lange geöffnet, um die
oben beschriebenen Vorgänge durchzuführen. Der Verbrauch
an Versorgungsunterdruckleistung ist also gering.

Da durch die Einstellung des Spulenkerns 3 der Faktor verändert wird, mit dem der Erregungsstrom ein Schwenkmoment
auf den Tauchanker ausübt, wird in gleicher Weise der Faktor
verändert, mit dem die Magnetkraft letztlich auf die Membran
12 einwirkt. Dies ergibt eine unterschiedliche Steigung
der Druck-Stromkennlinien, wie in Fig. 3 dargestellt. Durch
Einstellung der Stellschraube 21, an der die Vorspannungsfeder 20 angreift, wird wie beschrieben der Anfangspunkt
(Offset) der Kennlinien vorgegeben.

In Fig. 4 ist eine Variante des Ventilteils dargestellt, in
der gleiche Teile, die auch in dem beschriebenen Ventilteil
vorhanden sind, mit übereinstimmenden Bezugzeichen versehen wurden. Fig. 4 stellt einen Ausschnitt aus der Kammer
nach Fig. 1 dar.

Zu dem Ventilteil in Fig. 4 gehört ein Ventilblock 22, der
in ähnlicher Weise wie der Ventilblock 13 in Fig. 1 ausgebildet ist, jedoch vereinfachend keine ringförmige Schneide
aufweist, vielmehr wird ein Atmosphärenventilsitz durch eine Kante 22a einer kreisförmigen Öffnung gebildet. Gegen diese Kante ist ein Ventilkörper 23 abgestützt, der im wesentlichen die Form einer zweiseitig abgeflachten Kalotte aufweist. Die Anlage an der Kante 22 erfolgt mit dem Kalottenteil. Eine obere Abflachung 24 der Kalotte ist zur Anlage an dem Versorgungsventilsitz 17 geeignet. Die gleichgroße untere Abflachung 25 liegt gleichweit und parallel zu einer Mittelebene 26 wie die obere Abflachung 24. Die Form des Ventilkörpers 23 kann einen Versatz des Versorgungsventilsitzes 17 zu dem Atmosphärenventilsitz - Kante 22a - ausgleichen. Wenn die obere Abflachung 24 an dem Versorgungsventilsitz dicht abschließend anliegt, kann trotz gekippter Einbaulage des Versorgungsventilsitzes auch der Atmosphärenventilsitz an der Kante 22a dicht durch den kugelförmigen Teil des Ventilkörpers durch Andruck der Feder 16 geschlossen sein. Mit anderen Worten, der kalottenförmige Ventilkörper kann durch den Versorgungsventilsitz selbsttätig in eine Lage geschwenkt werden, in der sowohl der Versorgungsventilsitz als auch der Atmosphärenventilsitz geschlossen sind.

Durch die untere Abflachung 25 ist der Ventilkörper so ausgewuchtet, daß er die geschilderte Lage zum sicheren Abschluß des Versorgungsventilsitzes und des Atmosphärenventilsitzes unter Schwingungseinfluß nicht verläßt.

Zu Fig. 3, in der die Druck-Stromkennlinien dargestellt sind, wird noch nachgetragen, daß die Abszisse den Strom in mA und die Ordinate den Druck in hPa darstellt.

VDO Adolf Schindling AG

Gräfstraße 103
6000 Frankfurt/Main
G-R Kl-kmo  / 1820
7. März 1985

Patentansprüche:

1. Strom-Druckwandler insbesondere für eine Unterdruckregelung in Kraftfahrzeugen, mit einer Kammer, die mit einem Anschluß für Versorgungsunterdruck, mit einem Anschluß für eine Steuerdruckabnahme, mit einem Lufteinlaß für Außendruck und mit einer Membran als Kammerwand versehen ist, die durch einen Tauchanker eines Tauchanker-Elektromagneten verschiebbar ist, wobei mit der Membran ein Doppelventil steuerbar ist, welches je nach der Stellung der Membran eine Fluid-leitende Verbindung zu dem Versorgungsunterdruck oder dem Außendruck herstellen kann, bis der Steuerdruck in der Kammer  der von dem Tauchanker auf die Membran ausgeübten Kraft ent-spricht, insbesondere proportional ist,
d a d u r c h   g e k e n n z e i c h n e t ,
daß ein annähernd ringförmiger Luftspalt (6) zwischen dem Tauchanker (5) und einem Kern (3) des Elektromagneten (1) zu dessen Längsachse (4) exzentrisch gestaltet ist und um die Längsachse drehbar einstellbar ist  und daß der Tauchanker (5) um einen Schwenkpunkt außerhalb der Mittelachse schwenkbar gelagert ist.

2. Strom-Druckwandler nach Anspruch 1,
d a d u r c h   g e k e n n z e i c h n e t ,
daß zur schwenkbaren Lagerung des Tauchankers (5) mindestens eine Biegefeder (8 bzw. 9) vorgesehen ist.

3. Strom-Druckwandler nach Anspruch 1 oder 2,
d a d u r c h   g e k e n n z e i c h n e t ,
daß die Einstellung des Luftspalts (6) durch Drehung eines im wesentlichen zylindrischen Spulenkerns (3) des Tauchanker-Elektromagneten (1-7) erfolgt, der im Bereich seiner dem Tauchanker (5) zugewandten Stirnseite (3a) exzentrisch ausgebildet ist.

4. Strom-Druckwandler nach einem der Ansprüche 1-3, g e k e n n z e i c h n e t   d u r c h eine zusätzliche Vorspannungsfeder (20), welche den Spulenkern (3) des Tauchanker-Elektromagneten (1-7) mit dem Tauchanker (5) bzw. der Membran (12) verbindet.

5. Strom-Druckwandler nach Anspruch 4, d a d u r c h   g e k e n n z e i c h n e t, daß die Vorspannung der Vorspannungsfeder (20) durch eine Stellschraube (21) einstellbar ist.

6. Strom-Druckwandler insbesondere für eine Unterdruckregelung in Kraftfahrzeugen, die mit einem Anschluß für Versorgungsunterdruck, mit einem Anschluß für eine Steuerdruckabnahme, mit einem Lufteinlaß für Außendruck und mit einer Membran als Kammerwand versehen ist, die durch einen Tauchanker eines Tauchanker-Elektromagneten verschiebbar ist, wobei mit der Membran ein an ihr als Teil eines Doppelventils angebrachter im wesentlichen als Hohlzylinder geformter Ventilblock verschiebbar ist, der in Verbindung mit einem an einen Atmosphärenventilsitz angedrückten Ventilkörper ein Atmosphärenventil zwischen der Kammer und dem Außendruck bildet, und wobei der Ventilkörper zusammen mit einem Versorgungsventilsitz an dem Anschluß für Versorgungsunterdruck ein Vakuumventil bildet, insbesondere nach einem der vorangehenden Ansprüche, d a d u r c h   g e k e n n z e i c h n e t, daß der Ventilkörper (23),der innen an den Ventilblock (22) angedrückt wird, annähernd als Kugelkalotte mit zwei auf entgegengesetzten Seiten einer Mittelebene (26) parallel zueinander angeordneten, gleichgroßen Abflachungen (24, 25) dergestalt ausgebildet ist, daß eine der Abflachungen (24) zusammen mit dem Versorgungsventilsitz (17) an dem Anschluß (18) für Versorgungsunterdruck das Vakuumventil bildet und daß die gewölbte Fläche der Kugelkalotte zusammen mit einem ringförmigen Atmosphärenventilsitz (Kante 22a) in dem Ventilkörper, an den sie gedrückt wird, das Atmosphärenventil bildet.

1 / 2

0195185

FIG. 1

FIG. 2

FIG. 3

FIG.4